(19) **Europäisches Patentamt**
**European Patent Office**
**Office européen des brevets**

(11) **EP 2 059 390 B1**

(12) **EUROPEAN PATENT SPECIFICATION**

(45) Date of publication and mention
of the grant of the patent:
**16.04.2014 Bulletin 2014/16**

(51) Int Cl.:
**B32B 27/36** $^{(2006.01)}$

(21) Application number: **07793542.7**

(86) International application number:
**PCT/KR2007/003938**

(22) Date of filing: **17.08.2007**

(87) International publication number:
**WO 2008/020726 (21.02.2008 Gazette 2008/08)**

(54) **MULTILAYERED ALIPHATIC POLYESTER FILM**

MEHRLAGIGE ALIPHATISCHE POLYESTERFOLIE

FILM DE POLYESTER ALIPHATIQUE MULTICOUCHE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **18.08.2006 KR 20060078074**

(43) Date of publication of application:
**20.05.2009 Bulletin 2009/21**

(73) Proprietor: **SKC Co., Ltd.**
**Suwon-si,**
**Kyungki-do 440-300 (KR)**

(72) Inventors:
• **KIM, Kyung-Yon**
**Gyeonggi-do 440-330 (KR)**
• **KIM, Sang Il**
**Gyeonggi-do 441-460 (KR)**

(74) Representative: **Grünecker, Kinkeldey,**
**Stockmair & Schwanhäusser**
**Leopoldstrasse 4**
**80802 München (DE)**

(56) References cited:
**WO-A1-2007/113077     JP-A- 2002 127 343**
**JP-A- 2003 170 560     JP-A- 2003 170 560**
**JP-A- 2004 358 721     KR-A- 20060 081 713**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

FIELD OF THE INVENTION

The present invention is directed to a multilayered aliphatic polyester film having improved mechanical property, dimensional stability, transparency, flexibility, and especially heat adhesiveness, which is useful for environmentally friendly packaging.

BACKGROUND OF THE INVENTION

Conventional heat-adhesive plastic films such as polyvinyl chloride, polyethylene and polypropylene films are not completely satisfactory in terms of their performance characteristics. For example, polyvinyl chloride films generate toxic pollutants when incinerated, and polyethylene films have been employed only for low-grade packaging materials due to their relatively poor dimensional and mechanical properties. Heat-adhesive polypropylene films, on the other hand, have satisfactory mechanical properties, but generate unbiodegradable decomposition products. In order to solve such problems, there have been employed biodegradable aliphatic polyesters, particularly polylactic acid films. However, such films have poor heat adhesiveness and flexibility due to their high crystallinity.

Japanese Laid-open Patent Publication No. 1996-323946 discloses a multilayered film comprising a film composed of a polylactic acid polymer as the main component, and a biodegradable plastic resin having a melting point at least 10°C lower than that of one of the outermost layer of the plastic film. However, the film has the problems of poor processibility and unsatisfactory printability.

Japanese Laid-open Patent Publication No. 1998-151715 discloses a heat-sealable polymer laminate comprising a base layer made of a crystallized lactic acid-based polymer (A) and a sealing layer made of an amorphous lactic acid-based polymer (B) having a lower melting point than that of the lactic acid-based polymer (A). However, the heat adhesive strength of the film is unsatisfactorily low and shows poor dimensional stability.

Japanese Laid-open Patent Publication No. 2004-358721 discloses a lactic acid-based polymer multilayered film composed of a layer (layer A) comprising a lactic acid polymer with a D-lactic acid content of 8% or less and another layer (layer B) comprising a lactic acid polymer obtained by mixing 0.05~2 parts by weight of a lubricant and 0.05~1.0 parts by weight of an anti-blocking agent with 100 parts by weight of a lactic acid polymer having a D-lactic acid content of 9~91%, wherein at least one surface of this lactic acid polymer multilayered film is layer B. However, the heat adhesive strength of the film is significantly low due to the use of the lubricant, besides the problems of poor mechanical property and flexibility of the resulting film.

WO 2004/069535 discloses a polylactic acid multilayered film comprising a flexible biodegradable polyester resin layer with an elasticity modulus of 50-1,000 MPa disposed between polylactic acid films. However, this film suffers from the problem of surface waviness caused by the high degree of heat-shrinkage of the film, and it is not satisfactory for packaging.

SUMMURY OF THE INVENTION

Accordingly, it is an object of the present invention to provide a multilayered aliphatic polyester film having improved mechanical property, dimensional stability, transparency, flexibility, and heat adhesive property which can be advantageously used for packaging, and preparation thereof.

In accordance with the present invention, there is provided a multilayered aliphatic polyester film comprising a first resin layer and a second resin layer laminated on one or both sides of the first resin layer, wherein:

the first resin layer contains a polylactic acid-based polymer in an amount ranging from 50 to 100% by weight, and the second resin layer contains a polylactic acid-based polymer having 5% by weight or more of D-lactic acid blended therein, in an amount ranging from 50 to 100% by weight;

the polyester film is prepared by drawing a sheet obtained by co-extruding the first resin layer and the second resin layer in the longitudinal direction at a temperature ranging from the glass transition temperature of the first resin layer ($T_g$) to $T_g$ + 40 °C and drawing in the transverse direction at a temperature ranging from the longitudinal drawing temperature to the longitudinal drawing temperature + 40 °C, followed by heat setting at a temperature ranging from the melting temperature of the first resin layer ($T_m$) -5 °C to $T_m$-30 °C; and

the polyester film has a heat adhesive strength of 500 gf/inch (193 N/m) or more and a longitudinal and transverse direction heat shrinkage of 5 % or less when measured at 100 °C for 5 minutes.

DETAILED DESCRIPTION OF THE INVENTION

The multilayered aliphatic polyester film in accordance with the present invention comprises a first resin layer and a second resin layer laminated on one or both sides of the first resin layer, and each of the resin layers comprises a polylactic acid-based polymer in an amount of 50 % by weight or more, preferably 70 % by weight or more. When the amount of the polylactic acid-based polymer is less than 50 % by weight, the mechanical property and heat shrinkage of the resulting film may not be satisfactory for packaging.

The polylactic acid-based polymer used in the first resin layer preferably has a melting temperature ($T_m$) of 135 °C or higher. When the melting temperature of the first resin layer is lower than 135 °C, the dimensional stability and the mechanical property of the resulting film significantly deteriorate.

The polylactic acid-based polymer in the second resin layer comprises D-lactic acid in an amount of 5 % by weight or more, preferably 8 % by weight or more. When the amount of the D-lactic acid is less than 5 % by weight, the low temperature heat adhesiveness becomes poor due to the high crystallinity of the heat adhesive layer.

In order to improve the film's low temperature heat adhesiveness, the second resin layer may further comprise other aliphatic or aliphatic-aromatic polyester resin having a glass transition temperature($T_g$) of 0 °C or lower, in an amount of 30 % by weight or less, preferably 15 % by weight or less. When the amount of the aliphatic or aliphatic-aromatic polyester resin is more than 30 % by weight, the film transparency deteriorates and the dimensional stability becomes unsatisfactory.

The aliphatic or aromatic polyester resins ($T_g \leq 0$ °C) that can be further used in the second resin layer may be prepared by polymerizing an acid component selected from the group consisting of succinic acid, glutaric acid, malonic acid, oxalic acid, adipic acid, sebacic acid, azelaic acid, nonandi carboxylic acid and a mixture thereof as a aliphatic dicarboxylic acid or derivatives thereof, with a glycol component from the group consisting of ethyleneglycol, 1,3-propanediol, 1,4-butanediol, 1,5-pentanediol, 1,6-hexanediol, propyleneglycol, 1,4-cyclohexanediol, hexamethyleneglycol, polyethyleneglycol, triethyleneglycol, neopentylglycol, tetramethyleneglycol and a mixture thereof. It is also preferable that the acid component further comprises other biodegradable dicarboxylic acid such as terephthalic acid, phthalic acid, isophthalic acid, naphthalene-2,6-dicarboxylic acid, diphenylsulfonic acid dicarboxylic acid, diphenylether dicarboxylic acid, diphenoxyethane dicarboxylic acid, cyclohexane dicarboxylic acid and a mixture thereof.

The first and second resin layers of the inventive film may further comprise other additives such as a cross-linking agent, antioxidant, heat stabilizer, UV absorber to the extent they do not adversely affect the film properties.

In accordance with the present invention, the multilayered aliphatic polyester film may be prepared by co-extruding and drawing the first resin layer and the second resin layer.

Specifically, the first resin layer and the second resin layer are prepared separately. The layers are respectively melted at a melting temperature of +30°C or higher and laminated together using two or three feed blocks. Next, the laminate thus obtained is extruded through a conventional extrusion die. The types of lamination can be of any type, for example two(A/B) or three(B/A/B) layer types. The thickness ratio of the first resin layer : the second resin layer may range from 2:1 to 20:1. Subsequently, the first resin layer or the second resin layer is subjected to electrostatic cooling on the surface of a cooling drum.

The sheet thus obtained is biaxially drawn by a conventional drawing method, and then subjected to heat-setting and relaxation steps. The drawing and relaxation steps are important in controlling the heat adhesiveness, mechanical property, dimensional stability, flexibility, and surface density of the resulting film.

According to the present invention, the laminated sheet thus obtained is drawn in the longitudinal direction at a temperature ranging from $T_g$ of the first resin layer to $T_g$ + 40 °C. When the temperature of the longitudinal drawing is lower than $T_g$ of the first resin layer, the extendibility of the film becomes poor due to an excessively high orientation, and when higher than $T_g$ + 40 °C, the processability of the film becomes poor due to the excessively high temperature.

After the longitudinal drawing, the drawing in the transverse direction is preferably conducted at a temperature ranging from the above-mentioned longitudinal drawing temperature to the longitudinal drawing temperature + 40 °C. When the transverse drawing temperature is lower than the longitudinal drawing temperature, the surface of film becomes cloudy and the adhesive strength deteriorates. On the other hand, when the temperature of the transverse drawing is higher than the longitudinal drawing temperature + 40 °C, the mechanical and heat properties of the film become unsatisfactory because the heat adhesive layer may melt.

Further, the drawing ratio is preferably 2 to 5 in both the longitudinal and transverse directions, and the drawing procedure may be conducted in the longitudinal and transverse directions simultaneously or in two steps.

The film drawn both in the longitudinal and transverse direction is heat-set at a temperature which is 5 to 30 °C lower than the melting temperature ($T_m$) of the first resin layer, preferably 5 to 15 °C lower than the $T_m$ of the first resin layer. When the temperature of the heat-setting is lower than the lower limit, the adhesive strength deteriorates, and when it is higher than the upper limit, excessive crystallization may occur during the heat-setting, leading to increased haze and unsatisfactory mechanical property.

After heat-setting, the relaxation step may be conducted at a relaxation rate of 10% or less at an appropriate temperature so that the shrinkage stress formed during the process is relieved and satisfactory dimensional stability can be attained.

The polyester film in accordance with the present invention has a adhesive strength between the layers of 500 gf/inch (193 N/m) or more, preferably 800 gf/inch (309 N/m) or more, and a longitudinal and transverse direction heat shrinkage of 5 % or less, preferably 3 % or less when measured at 100°C for 5 minutes.

When the heat adhesive strength of the film is less than 500 gf/inch (193 N/m), the wrapping property becomes unsatisfactory for packaging due to the occurrence of delamination of the layers. When the heat shrinkage of the film exceeds 5%, problems arise during printing.

In addition, the polyester film in accordance with the present invention has initial elastic modulus of 50 to 500 kgf/mm$^2$, preferably 200 to 350 kgf/mm$^2$ determined from a strain-stress curve, stiffness of 1.0 gr/$\mu$m or less, preferably 0.8 gr/$\mu$m, and haze of 20% or less, preferably 10% or less.

When the initial elastic modulus of the film is less than 50 kgf/ mm$^2$, problems occur during printing due to the occurrence of wrinkles, while when more than 500 kgf/ mm$^2$, the flexibility of the film becomes poor. In addition, when the stiffness of the film is more than 1.0 gr/$\mu$m, the film may easily break during the packaging step, and the heat adhesive and the transparency of the film become poor.

Further, the inventive multilayered aliphatic polyester film has a coefficient of dynamic friction of 1.0 or less.

As described above, the inventive multilayered aliphatic polyester films can be efficiently used for packaging due to its superior mechanical property, dimensional stability, transparency, flexibility and heat adhesiveness.

The following Examples are given for the purpose of illustration only, and are not intended to limit the scope of the invention.

Example 1

Polylactic acid resin (Nature Works LLC) having a melting point of 154 °C and a master batch resin prepared by dispersing silicon dioxide having a particle size of 2 $\mu$m in the same polylactic acid resin were blended so that the silicon dioxide content of the resulting film became 0.07 % by weight, which was designated a first resin (A).

The first resin thus obtained and a second resin, amorphous polylactic acid (Nature Works LLC) which showed no distinct melting point and contained 12 % by weight of D-lactic acid, were melt-extruded through two extruders, keeping the first and second resin feed ratio at 5:1 by controlling the gear pump rates, and they were laminated to form a two layer(A/B) laminated in a feed block. The laminate thus obtained was pass throw a T-die and cooled in a cooling drum to obtain a double-layered coextruded sheet.

The coextruded sheet thus obtained was drawn at a draw ratio of 3.0 in the longitudinal direction at 75 °C and at a draw ratio of 3.8 in the transverse direction at 80 °C, heat set at 149 °C, and subjected to relaxation to a degree of 3%, to obtain a biaxially drawn polyester film of 30 $\mu$m thickness.

**Example 2**

The procedure of Example 1 was repeated except for using, as the second resin layer, a mixture of 90 % by weight of amorphous polylactic acid resin containing 12 % by weight of D-lactic acid and 10 % by weight of aliphatic polyester resin (Ire chemical Ltd., Enpol resin G4460(PBAS)) having a glass transition temperature of -48 °C, to obtain a double-layered(A/B) coextruded sheet.

The double-layered coextruded sheet thus obtained was drawn at a draw ratio of 3.0 in the longitudinal direction at 70 °C and at a draw ratio of 3.8 in the transverse direction at 75 °C, heat set at 130 °C, and subjected to relaxation to a degree of 3%, to obtain a biaxially drawn polyester film of 30 $\mu$m thickness.

**Example 3**

The procedure of Example 1 was repeated except for using, as the second resin layer, polylactic acid resin having a melting point of 170 °C and a number-average molecular weight of 110,000 and containing 1.4 % by weight of D-lactic acid as the first resin, and a mixture (silicon dioxide content : 0.07 % by weight) of amorphous polylactic acid resin which showed no distinct melting point and containing 12 % by weight of D-lactic acid, and master batch resin with silicon dioxide having a particle size of 2 $\mu$m in the same resin, to obtain a three-layered(B/A/B) coextruded sheet.

The three-layered coextruded sheet thus obtained was drawn at a draw ratio of 3.0 in the longitudinal direction at 78 °C and drawn at a draw ratio of 3.8 in the transverse direction at 85 °C, heat set at 163 °C, and subjected to relaxation to a degree of 3%, to obtain a biaxially drawn polyester film of 30 $\mu$m thickness.

**Comparative Example 1**

The procedure of Example 1 was repeated except for using, as the second resin layer, amorphous polylactic acid resin which showed no distinct melting point and containing 12 % by weight of D-lactic acid as the first resin, and a mixture of the same resin used in the first resin and 0.07 % by weight of silicon dioxide slip agent, to obtain a double-layered(A/B) coextruded sheet.

The double-layered coextruded sheet thus obtained was drawn at a draw ratio of 3.0 in the longitudinal direction at 70 °C and drawn at a draw ratio of 3.8 in the transverse direction at 80 °C, heat set at 100 °C, and subjected to relaxation to a degree of 3%, to obtain a biaxially drawn polyester film of 30 $\mu$m thickness.

**Comparative Example 2**

The procedure of Example 1 was repeated except for using, as a second resin layer, polylactic acid resin having a melting point of 170 °C and a number-average molecular weight of 110,000 and containing 1.4 % by weight of D-lactic acid as the first resin layer, and a mixture of 30 % by weight of amorphous polylactic acid containing 12 % by weight of D-lactic acid with the slip agent, and 70 % by weight of aliphatic-aromatic polyester resin (Ire chemical Ltd. Enpol resin G8060(PBAT)) having a melting point of -48 °C, to obtain a double-layered(A/B) coextruded sheet.

The double-layered coextruded sheet thus obtained was drawn at a draw ratio of 3.0 in the longitudinal direction at 67 °C and drawn at a draw ratio of 3.8 in the transverse direction at 70 °C, heat set at 100 °C, and subjected to relaxation to a degree of 5%, to obtain a biaxially drawn polyester film of 30 $\mu$m thickness.

**Comparative Example 3**

The procedure of Example 1 was repeated except for drawing at a draw ratio of 3.0 in the longitudinal direction at 50 °C and drawing at a draw ratio of 3.8 in the transverse direction at 55 °C, and then heating set at 100 °C, followed by subjecting to relaxation to a degree of 3%, to obtain a biaxially drawn polyester film of 30 $\mu$m thickness.

**Comparative Example 4**

The procedure of Example 1 was repeated except for drawing at a draw ratio of 3.0 in the longitudinal direction at 105 °C and drawing at a draw ratio of 3.8 in the transverse direction at 120 °C, and then heating set at 145 °C, followed by subjecting to relaxation to a degree of 3%, to obtain a biaxially drawn polyester film of 30 $\mu$m thickness.

**Comparative Example 5**

The procedure of Example 1 was repeated except for using, as the second resin layer, polylactic acid resin having a melting point of 170 °C and a number-average molecular weight of 110,000 and containing 1.4 % by weight of D-lactic acid, to obtain a double-layered (A/B) coextruded sheet.

The double-layered coextruded sheet thus obtained was drawn at a draw ratio of 3.0 in the longitudinal direction at 70 °C and drawn at a draw ratio of 3.8 in the transverse direction at 85 °C, and then heating set at 140 °C, followed by subjecting to relaxation to a degree of 3%, to obtain a biaxially drawn polyester film of 30 $\mu$m thickness.

**Comparative Example 6**

The procedure of Example 1 was repeated except for using a mixture of 40 % by weight of polylactic acid resin having a melting point of 154 °C and 60 % by weight of aliphatic-aromatic polyester resin (Ire chemical Ltd. Enpol resin G8060(PBAT)) having a melting point of 125 °C, as the first resin, and amorphous polylactic acid containing 12 % by weight of D-lactic acid with the slip agent and having a number-average molecular weight of 110,000, to obtain a double-layered(A/B) coextruded sheet.

The double-layered coextruded sheet thus obtained was drawn at a draw ratio of 3.0 in the longitudinal direction at 55 °C and drawn at a draw ratio of 3.8 in the transverse direction at 75 °C, and then heating set at 100 °C, followed by subjecting to relaxation to a degree of 3%, to obtain a biaxially drawn polyester film of 30 $\mu$m thickness.

Performance Test

The polyester films obtained in Examples 1 through 3 and Comparative Examples 1 through 6 were each assessed for the following properties. The results are shown in Table 1.

(1) Thermal characteristics ($T_g$, $T_m$)

Differential scanning calorimeter (Perkin-Elmer DSC-7) analysis was performed at a temperature programming rate of 10°C/min. The glass transition temperature($T_g$, °C) was determined from the first peak in the heat absorption curve. The next peak in the curve corresponded to the crystallization temperature($T_c$, °C), and the third heat absorption peak, to the melting point($T_m$, °C).

(2) Mechanical strength

The tensile strength(kgf/mm$^2$), elongation at break(%) and initial elastic modulus(kgf/mm$^2$) were measured according to ASTM D 882 using a 100 mm×15mm film sample at a 50 mm intervals and an elongation rate of 200 mm/min with Universal Tester (UTM 4206-001, Instron Inc.).

(3) Stiffness (gr/$\mu$m)

A film sample was cut into a 200 mm (length) × 15.4 mm (width) piece, the opposite edges of the film specimen were attached to a bending stiffness tester. Stiffness was calculated by determining whether or not the central point of the film bends by an applying force.

(4) Heat shrinkage (%)

A film sample was cut into a 200 mm (length) × 15 mm (width) piece, maintained at 100 °C in a circulating air oven for 5 minutes, and the change in the film length was measured. Using the following equation, the degree of shrinkage in the longitudinal and the transverse directions were calculated.

$$\text{Heat shrinkage (\%)} = \text{(Length before heat treatment} - \text{Length after heat treatment / Length before heat treatment} \times 100$$

(5) Haze

The haze of a film sample was measured with a hazemeter(Model SEP-H, Nihohn Semitsu Kogaku).

(6) Coefficient of dynamic friction ($\mu$k)

The dynamic friction coefficient was measured using the result of Fig. 1-C of ASTM D1894.

(7) Drawing stability

The thickness and the tendency of breakage of a sample film were assessed by the following standards.

O Good: The average variation in the thickness was less than ±5%, showing uniform drawing.
□ Decent: The average variation in the thickness was less than ±10%, showing relatively uniform drawing.
× Poor: The average variation in the thickness was ±10% or more, or breakage occurred during drawing.

(8) Heat adhesive strength

Two film samples each cut into a 15 mm (width) × 150 mm (length) piece were placed such that the heat-adhesive layers thereof faced each other, and pressed under a heat gradient (40 psi/1 sec and 100 °C). The fused films were subjected to peeling with a peel tester at 300 m/min, and the adhesive strength was measured by the force at the peeling point. When the adhesive strength was more than 500 gf/inch (193 N/m), the film was judged to be satisfactory for use.

Table 1

| Film ingredients | | | Units | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Film ingredients | First resin layer(A) | Polylactic acid | (wt %) | 100 | 100 | 100 | 100 | 100 | 100 | 100 | 100 | 40 |
| | | | $T_m$(°C) | 154 | 154 | 170 | | 170 | 154 | 154 | 154 | 154 |
| | | Other polyester | (wt%) | 0 | 0 | 0 | 0 | 0 | 0 | 0 | 0 | 60 |
| | | | $T_m$(°C) | - | - | - | - | - | - | - | - | 115 |
| | Second resin layer(B) | D-Lactic acid | (wt %) | 12 | 12 | 8 | 12 | 12 | 12 | 12 | 1.4 | 12 |
| | | Polylactic acid | (wt %) | 100 | 90 | 100 | 100 | 30 | 100 | 100 | 100 | 100 |
| | | Other polyester | (wt %) | 0 | 10 | 0 | 0 | 70 | 0 | 0 | 0 | 0 |
| | | | $T_0$(°C) | - | -48 | - | - | -48 | - | - | - | - |
| Structur of lamination | | | | A/B | A/B | B/A/B | A/B | A/B | B/A/B | A/B | A/B | A/B |
| Preparation condition | Glass transition temperature of first resin layer | | °C | 61 | 61 | 67 | 66 | 67 | 61 | 61 | 61 | 45 |
| | Longitudinal drawing temperature | | °C | 75 | 70 | 78 | 70 | 67 | 50 | 105 | 70 | 55 |
| | Transverse drawing temperature | | °C | 80 | 75 | 85 | 80 | 70 | 52 | 120 | 85 | 75 |
| | Heat-setting temperature | | °C | 149 | 130 | 163 | 100 | 100 | 100 | 145 | 110 | 100 |
| | Relaxation ratio | | % | 3 | 3 | 3 | 3 | 5 | 3 | 3 | 3 | 3 |
| | Drawing stability | | - | 0 | 0 | 0 | 0 | 0 | Δ | × | 0 | Δ |

EP 2 059 390 B1

(continued)

| | | Units | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Film performance | Tensile strength(longitudinal/tr ansverse) | kgf/mm² | 18/20 | 16/18 | 20/22 | 9/11 | 13/18 | 17/19 | - | 23/25 | 10/110 |
| | Elongation(longitudinal/transverse) | % | 130/100 | 135/105 | 120/100 | 150/130 | 90/80 | 80/90 | - | 90/80 | 130/100 |
| | Initial elastic modulus (longitudinal /transverse) | kgf/mm² | 250/270 | 270/290 | 290/290 | 290/300 | 300/320 | 505/520 | - | 510/515 | 280/300 |
| | Stiffness | gr/μm | 0.5 | 0.4 | 0.6 | 0.4 | 0.3 | 1.1 | - | 1.1 | 0.8 |
| | Heat adhesive strength | gf/inch | 1000 | 1000 | 800 | 800 | 480 | 100 | - | 50 | 800 |
| | Heat shrinkage ratio(longitudinal/trans verse) | % | 3/0 | 5/1 | 1/0 | 30/35 | 18/15 | 3/0 | - | 1/0 | 45/55 |
| | Coefficient of dyanamic friction | - | 0.4 | 0.4 | 0.5 | 0.5 | 0.5 | 0.5 | - | 1.1 | 0.5 |
| | Haze | % | 2.0 | 6.0 | 2.0 | 2.0 | 40.0 | 2.0 | - | 2.0 | 60 |

As shown in Table 1, the inventive multilayered aliphatic polyester films show improved properties in terms of mechanical property, dimensional stability, transparency, flexibility, and heat adhesiveness, as compared with those of Comparative Examples 1 to 6.

## Claims

1.   A multilayered aliphatic polyester film comprising a first resin layer and a second resin layer laminated on one or both sides of the first resin layer, wherein:

the first resin layer contains a polylactic acid-based polymer having a melting temperature ($T_m$) of 135°C or higher in an amount ranging from 50 to 100% by weight, and the second resin layer contains a polylactic acid-based polymer having 5% by weight or more of D-lactic acid blended therein, in an amount ranging from 50 to 100% by weight;

the polyester film is prepared by drawing a sheet obtained by co-extruding the first resin layer and the second resin layer in the longitudinal direction at a temperature ranging from the glass transition temperature of the first resin layer ($T_g$) to $T_g$ + 40°C and drawing in the transverse direction at a temperature ranging from the longitudinal drawing temperature to the longitudinal drawing temperature + 40 °C, followed by heat setting at a temperature ranging from the melting temperature of the first resin layer ($T_m$)-5 °C to $T_m$-15 °C;

the second resin layer further comprises an aliphatic or an aliphatic-aromatic polyester resin having a glass transition temperature ($T_g$) of 0 °C or lower in an amount of 30% by weight or less and

the polyester film has a heat adhesive strength of 500 gf/inch (193 N/m) or more and a longitudinal and transverse direction heat shrinkage of 5% or less, wherein the heat adhesive strength is measured by the force at the peeling point when fused films, which are prepared by pressing two film samples each cut into a 15 mm (width) x 150 mm (length) piece under a heat gradient (40 psi/1 second and 100 °C) with facing the heat-adhesive layers thereof each other, are subjected to peeling with a peel tester at 300 m/min, and

wherein the longitudinal and transverse direction heat shrinkage of the film is calculated by the following equation,

Heat shrinkage (%) = (Length before heat treatment − Length after heat treatment) / Length before heat treatment x 100

wherein the change in the length is measured using a piece of film sample with 200 mm (length) x 15 mm (width) at 100°C in a circulating air oven for 5 minutes.

2.   The multilayered aliphatic polyester film of claim 1, which has an initial elastic modulus of 50 to 500 kgf/mm$^2$ and a stiffness of 1.0 gr/ $\mu$m or less.

3.   The multilayered aliphatic polyester film of claim 1, which has a haze of 20% or less.

4.   The multilayered aliphatic polyester film of claim 1, which has a coefficient of dynamic friction of 1.0 or less.

5.   The multilayered aliphatic polyester film of claim 1, wherein the film is subjected to relaxation at a rate of 10% or less after heat setting.

6.   A wrapping material comprising the multilayered aliphatic polyester film according to any one of claims 1 to 5.

## Patentansprüche

1.   Ein mehrschichtiger aliphatischer Polyesterfilm, der eine erste Harzschicht und eine zweite Harzschicht umfasst, die auf einer oder auf beiden Seiten der ersten Harzschicht laminiert ist, wobei:

die erste Harzschicht ein Polymilchsäure-basierendes Polymer mit einer Schmelztemperatur ($T_m$) von 135°C, oder höher in einer Menge im Bereich von 50 bis 100 Gew.-% enthält, und die zweite Harzschicht ein Polymilchsäure-basierendes Polymer mit 5 Gew.-%, oder mehr D-Milchsäure darin vermengt in einer Menge im Bereich von 50 bis 100 Gew.-% enthält;

der Polyesterfilm hergestellt wurde durch Ziehen eines Blattes, erhalten durch Coextrudieren der ersten Harzschicht und der zweiten Harzschicht, in Längsrichtung bei einer Temperatur im Bereich der Glasübergangstemperatur der ersten Harzschicht ($T_g$) bis $T_g$ + 40 °C und Ziehen in der Querrichtung bei einer Temperatur im Bereich der Ziehtemperatur in Längsrichtung bis zu der Ziehtemperatur in Längsrichtung + 40 °C, gefolgt von Thermofixierung bei einer Temperatur im Bereich der Schmelztemperatur der ersten Harzschicht ($T_m$)-5 °C bis $T_m$-15 °C;

die zweite Harzschicht weiterhin ein aliphatisches oder ein aliphatisch-aromatisches Po-lyesterharz mit einer Glasübergangstemperatur ($T_g$) von 0 °C, oder niedriger in einer Menge von 30 Gew.-%, oder weniger umfasst, und

der Polyesterfilm eine Wärme-Haftfestigkeit von 500 gf/inch (193 N/m), oder mehr und eine Hitzeschrumpfung in Längs- und Querrichtung von 5%, oder weniger aufweist, wobei die Wärmehaftfestigkeit gemessen wird über die Kraft am Ablösepunkt, wenn fusionierte Filme, die durch Pressen zweier Filmproben hergestellt wurden, die in ein 15 mm (Breite) x 150 mm (Länge) Stück geschnitten wurden, unter einem Hitzegradienten (40 psi/1 Sekunde und 100°C) wobei die jeweiligen Hitzehaftschichten einander zugewandt sind, einem Ablösen mit einem Ablösetester bei 300 m/Min unterworfen werden, und

wobei die Hitzeschrumpfung des Films in Längs- und Querrichtung durch die folgende Gleichung berechnet wird,

$$\text{Hitzeschrumpfung (\%)} = (\text{Länge vor der Hitzebehandlung} - \text{Länge nach der Hitzebehandlung}) / \text{Länge vor der Hitzebehandlung} \times 100,$$

wobei die Änderung in der Länge gemessen wird unter Verwendung einer Filmprobe mit 200 mm (Länge) x 15 mm (Breite) bei 100°C in einem zirkulierende Luft-Ofen für 5 Minuten.

2. Der mehrschichtige aliphatische Polyesterfilm nach Anspruch 1, der ein anfängliches Elastizitätsmodul von 50 bis 500 kgf/mm² und eine Steifheit von 1,0 gr/μm, oder weniger aufweist.

3. Der mehrschichtige aliphatische Polyesterfilm nach Anspruch 1, der eine Trübung von 20% oder weniger aufweist.

4. Der mehrschichtige aliphatische Polyesterfilm nach Anspruch 1, der einen dynamischen Reibungskoeffizienten von 1,0, oder weniger aufweist.

5. Der mehrschichtige aliphatische Polyesterfilm nach Anspruch 1, wobei der Film nach der Hitzefixierung einer Entspannung bei einer Rate von 10%, oder weniger unterworfen wurde.

6. Ein Verpackungsmaterial, das den mehrschichtigen aliphatischen Polyesterfilm nach einem der Ansprüche 1 bis 5 umfasst.

**Revendications**

1. Film polyester aliphatique multicouche comprenant une première couche de résine et une deuxième couche de résine, laminée sur un côté de la première couche de résine ou sur les deux côtés de celle-ci, dans lequel :

la première couche de résine contient un polymère à base d'acide polylactique présentant une température de fusion ($T_m$) supérieure ou égale à 135°C, à raison de 50 % à 100 % en masse, et la deuxième couche de résine contient un polymère à base d'acide polylactique dans lequel est mélangée une quantité d'acide D-lactique supérieure ou égale à 5 % en masse, à raison de 50 % à 100 % en masse ;

le film polyester est préparé à partir d'une feuille obtenue par co-extrusion de la première couche de résine et de la deuxième couche de résine, par étirement en direction longitudinale à une température comprise entre $T_g$ et Tg + 40°C, $T_g$ étant la température de transition vitreuse de la première couche de résine, et par étirement en direction transversale à une température comprise entre la température d'étirement longitudinal et la température d'étirement longitudinal + 40°C, suivis par une thermofixation à une température comprise entre $T_m$ - 5°C et $T_m$ - 15°C, $T_m$ étant la température de fusion de la première couche de résine ;

la deuxième couche de résine comprend en outre une résine polyester aliphatique ou aliphatique-aromatique présentant une température de transition vitreuse ($T_g$) inférieure ou égale à 0°C, à raison d'une quantité inférieure ou égale à 30 % en masse, et

le film polyester présente une force d'adhésion thermique supérieure ou égale à 500 gf/pouce (193 N/m) et un retrait thermique en directions longitudinale et transversale inférieur ou égal à 5 %, dans lequel la force d'adhésion thermique est mesurée par la force au point de pelage lorsque des films fusionnés qui sont préparés en pressant deux échantillons de film découpés chacun en morceaux de 15 mm (largeur) par 150 mm (longueur) sous un gradient thermique (40 psi / 1 seconde et 100°C), leurs couches thermo-adhésives respectives se faisant face, sont soumis à un pelage avec un testeur de force de pelage à 300 m/min, et

dans lequel le retrait thermique du film en directions longitudinale et transversale est calculé par l'équation suivante:

$$\text{retrait thermique (\%)} = (\text{longueur avant traitement thermique} - \text{longueur après traitement thermique}) / \text{longueur avant traitement thermique} \times 100$$

dans laquelle le changement de longueur est mesuré à l'aide d'un morceau d'échantillon de film de 200 mm (longueur) x 15 mm (largeur) à 100°C dans un four à circulation d'air durant 5 minutes.

2. Film polyester aliphatique multicouche selon la revendication 1, présentant un module d'élasticité initial compris entre 50 kgf/mm$^2$ et 500 kgf/mm$^2$, et une raideur inférieure ou égale à 1,0 g/$\mu$m.

3. Film polyester aliphatique multicouche selon la revendication 1, présentant une opacité inférieure ou égale à 20 %.

4. Film polyester aliphatique multicouche selon la revendication 1, présentant un coefficient de frottement dynamique inférieur ou égal à 1,0.

5. Film polyester aliphatique multicouche selon la revendication 1, dans lequel le film est soumis à une relaxation à un taux inférieur ou égal à 10 % après la thermofixation.

6. Matériau d'emballage comprenant le film polyester aliphatique multicouche selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8323946 A
- JP 10151715 A
- JP 2004358721 A
- WO 2004069535 A